# EUROPEAN PATENT SPECIFICATION

(11) **EP 4 422 578 B1**
(45) Date of publication and mention of the grant of the patent: **22.07.2026**
(21) Application number: 22884785.1
(22) Date of filing: 26.10.2022
(51) Int. Cl.: A61H 33/06, G05B 19/045, G05D 23/19, G05D 23/32

(54) **A SAUNA OPERATIONAL STATE CONTROL SYSTEM**
SYSTEM ZUR STEUERUNG DES SAUNA-BETRIEBSZUSTANDES
SYSTÈME DE COMMANDE D'ÉTAT DE FONCTIONNEMENT DE SAUNA

(30) Priority: 26.10.2021 AU 2021903411
(43) Date of publication of application: 04.09.2024
(73) Proprietor: Qualia Core Pty Ltd, Yellow Rock, NSW 2777 (AU)
(72) Inventor: TYSON, Alex, Sydney, New South Wales 2000 (AU); VESELOVSKY, Jaroslav, Sydney, New South Wales 2000 (AU)
(74) Representative: Vesterinen, Jussi Tapio
(86) International application number: PCT/AU2022/051280
(87) International publication number: WO 2023/070150

(56) References cited:
- EP-A1- 3 361 401
- WO-A1-00/18349
- WO-A1-2018/062520
- US-A1- 2014 283 294
- US-A1- 2017 131 693
- US-A1- 2019 238 957
- US-A1- 2021 072 729
- US-B2- 10 874 586

## Description

### Field of the Invention

This invention relates generally to sauna control systems and, more particularly, this invention relates to a sauna operational state control system.

### Background of the Invention

A sauna is a small room or building designed as a place to experience dry or wet heat sessions within which steam and high heat makes bathers perspire.

A thermometer in the sauna is typically used to regulate heat and a hygrometer can be used to measure levels of humidity or steam.

The present invention seeks to provide a sauna control system, which will overcome or substantially ameliorate at least some of the deficiencies of the prior art, or to at least provide an alternative.

Document WO2018/062520A1 discloses a sauna cabin device with sensors for recording vital parameters, storing them in a database, and evaluating them for recommendations and/or control commands, which can automatically adjust the heater based on a preset value.

### Summary of the Disclosure

There is provided herein a sauna operational state control system comprising a controller comprising an I/O interface interfacing a heater. The controller further comprises a processor executing a state controller configurable in a plurality of sauna operational states including standby and heating states. The processor further executes a heater controller operably controlling the heater via the I/O interface.

The controller further comprises data storage and the state controller is configured to receive schedule data when in the standby state and store the schedule data in the data storage.

The state controller is configured to calculate a session start time according to the schedule data, calculate a heating time period, and calculate a heating time period start time according to the session start time and the heating time period.

As such, the state controller monitors time and, at the heating time period start time, enters the heating state wherein the heater controller operates the heater.

The present state controller allows for time-based anticipatory operational state control of a sauna including ensuring reaching of temperature setpoint parameters.

The controller may also control various peripheral components including lighting controllers and audio controllers according to the operational states.

In embodiments beyond ensuring reaching of a temperature setpoints in anticipation of a scheduled session, the system allows for the dynamic calculation of heating time periods, including in accordance with environmental factors and/or previous thermometer measurements.

The system may also adapt to user delays beyond scheduled session start times wherein the controller may further control the heater according to the commencement delay either received from a user electronic device or alternatively calculated by sensing the location thereof.

The system may await user acknowledgement prior entering an in-session state which may received from the user electronic device or alternatively determined by proximity sensors detecting the presence of a user or the electronic device.

Other aspects of the invention are also disclosed.

### Brief Description of the Drawings

Notwithstanding any other forms which may fall within the scope of the present invention, preferred embodiments of the disclosure will now be described, by way of example only, with reference to the accompanying drawings in which:
Figure 1 shows a sauna operational state control system in accordance with an embodiment;
Figure 2 shows data and controllers of the system of Figure 1 in further detail; and
Figure 3 shows exemplary processing of the system in accordance with an embodiment.

### Description of Embodiments

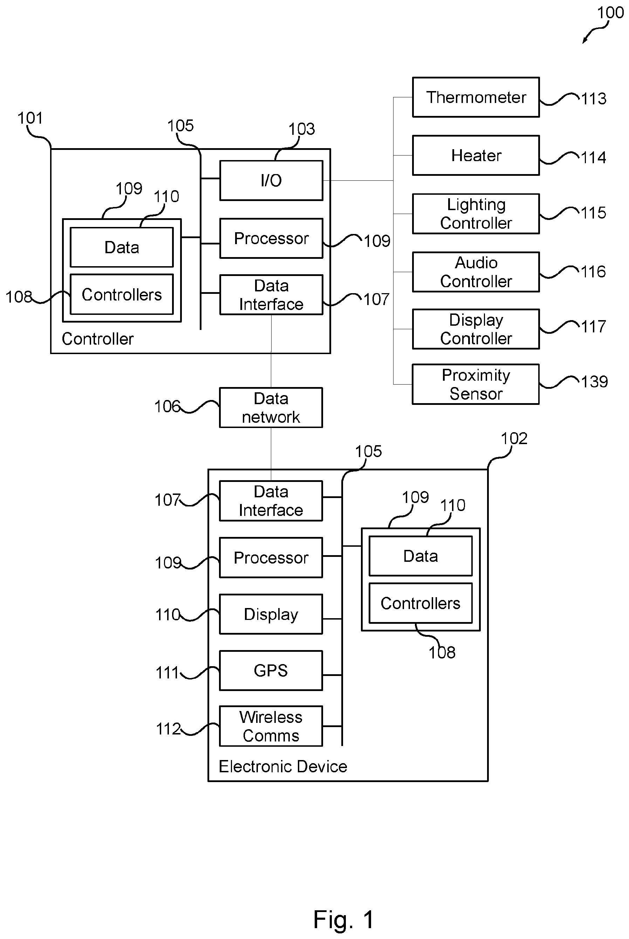

Figure 1 shows a sauna operational state control system 100. The system 100 comprises a controller 101.

The controller 101 comprises a processor 109 for processing digital data. The controller 101 further comprises a storage device 109 configured for storing computer program code instructions and associated data 110 in operable communication with the processor 109 via a system bus 105. In use, the processor 109 fetches the computer program code instructions and associated data 110 from the storage device 109 for interpretation and execution of the functionality described herein.

In embodiments, the controller 101 may take the form of a small form factor low-power ruggedised weatherproof computer device executing software or firmware.

The computer program code instructions may be logically divided into a plurality of computer program code instruction controllers 108.

The controller 101 comprises an I/O interface 103 interfacing various peripherals.

These peripherals may include a thermometer 113, sauna heater 114, lighting controller 115, audio controller 116, display controller 117 and/or proximity sensor 139.

The controller 101 may further comprise a data interface 107 for sending and receiving data across a data network such as a point-to-point data network or a local area or wide area network such as the Internet.

The system 100 may further comprise an electronic device 102 in operable communication with the controller 101. The electronic device 102 may similarly comprise a processor 109 fetching, interpreting and executing computer program code instructions and associated data 110 from a memory device 109 via a system bus 105.

The electronic device 102 may similarly comprise a data interface 107, including for communication with the controller 101.

The electronic device 102 may comprise a digital display 110 for the display of digital data thereon. In embodiments, a haptic overlay interfaces the digital display 110 for the receipt of user gestures and input in relation to digital information displayed thereon.

In embodiments, the electronic device 102 may further comprise location sensing capability, including by way of a GPS sensor 111. Furthermore, the electronic device 102 may have a wireless communication interface 112, which may be a Bluetooth interface. In embodiments, the Bluetooth interface may be a Bluetooth BLE interface configured to transmit or receive periodic data broadcasts.

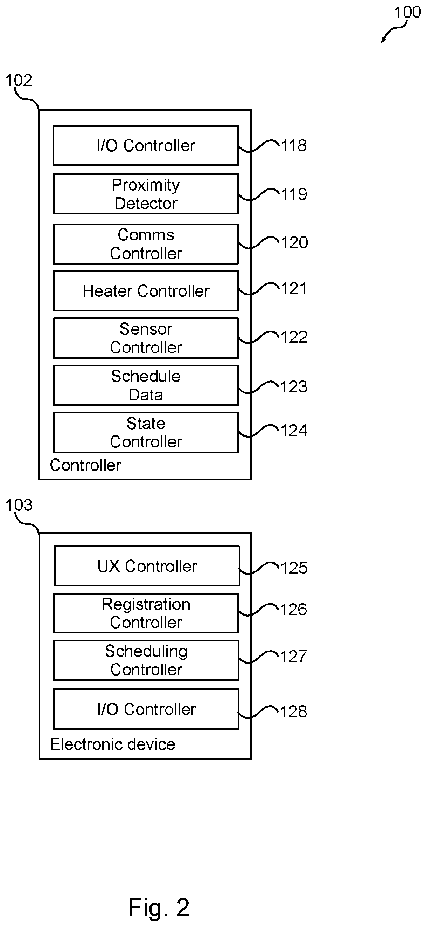

Figure 2 shows exemplary data 110 and controllers 108 of the system 100 in further detail.

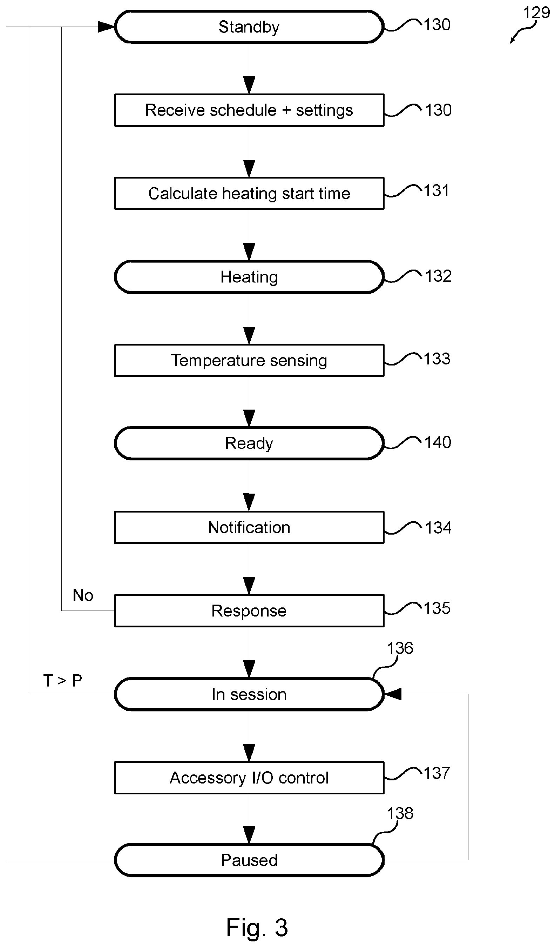

The controller 101 may comprise a state controller 124 operable in a plurality of states as will be described in further detail below with reference to Figure 3.

The controller 101 may store schedule data 123 which may be used to calculate sauna session start times and other parameters, such as session durations, temperature setpoints, accessory settings (such as for lighting and music control) and the like.

The controller 101 may further execute a sensor controller 122 interfacing one or more sensors via the I/O interface 103, such as the thermometer 113 and proximity sensor 139.

The controller 101 may further execute a heater controller 121 which controls the heater 114 via the I/O interface 103.

The controller 101 may further execute a communication controller 120, including for transmitting electronic communications to the electronic device 102, including by way of push notification.

The controller 101 may further execute a proximity detector 119 which may detect proximity of the electronic device 102 or detect proximity of a person at or within the sauna including by interfacing the proximity sensor 139.

The controller 101 may further execute an I/O controller 118 which may control various accessories, including the lighting controller 115 and/or audio controller 116 via the I/O interface 103.

The electronic device 103 may execute a user interface controller 125 to display a user interface on the digital display 110.

The electronic device 103 may further execute a registration controller 126 for registering the controller 101 with electronic device 103, inputting various parameters and the like.

The electronic device 103 may further execute a schedule controller 127 which may schedule sauna sessions, including by transmitting schedule data to the controller 101.

The electronic device 103 may further execute an I/O controller 128 for controlling various peripherals via the I/O interface 103. For example, in embodiments, the I/O controller 128 may control the temperature, lighting, audio and or the like including in response to user input via the user interface.

Exemplary processing 129 by the system is given in Figure 3 wherein the state controller 124 goes through various states indicated by rounded corner rectangles in Figure 3.

A user may firstly register the electronic device 102 with the controller 101. In embodiments, the electronic device 102 takes the form of a mobile communication device wherein the user downloads and installs a software application thereon.

The user may then control the user interface to allow the registration controller 126 to register one or more controllers 101 with the electronic device 102. Generally, each sauna would be provided with its own controller 101 and therefore a user may register any number of controllers 101 depending on the number of saunas.

The state controller 124 is initially in a standby state 130.

A user may schedule a sauna session via the user interface by inputting a start time for a sauna session. The user may specify other information, including a duration, a day of the week, repeat frequency if applicable and other parameter settings, including temperature, lighting and audio preferences. In embodiments, a user may commence a sauna session immediately without scheduling.

The session controller 127 generates session data accordingly and transmits the session data to the controller 101. In the standby state, at step 130 the state controller 124 is configured to receive schedule data and store the schedule data in the data storage 109.

It should be noted that additionally, or alternatively, the schedule data may be configured by way of user interface (not shown) of the controller 101, such as by way of an electronic display device with haptic overlay or alternatively pushbutton inputs and the like.

The state controller 124 calculates a session start time according to the schedule data. Furthermore, the state controller 124 calculates a heating time period.

The state controller 124 then calculates a heating time period start time at step 131 according to the session start time and the heating time period.

The state controller 124 may monitor an internal clock and, at the heating time period start time, the state controller 124 may enter the heating state 132 wherein the heating controller 121 controls the heater 114 via the I/O interface 103 to commence heating the sauna. It should be note that the purpose of the heating state 132 is to reach the temperature setpoint which, in embodiments, could also involve not activating the heater to allow the sauna to cool down.

The heating controller 121 may adaptively determine the heating time period so that the temperature setpoint is reached (or nearly reached) at the session start time.

In embodiments, during the initial registration, the controller 101 is configured with various configurations settings, including the interior volume of the sauna, the power of the heater and the like wherein the heating controller 121 is able to calculate the heating time period start time according to the configuration settings. For example, for greater interior volumes or lower power heaters, the heating controller 121 would calculate a longer heating time period as compared to if the interior volume were smaller or the heater of higher power.

In further embodiments, the heating controller 121 may further dynamically calculate the heating time period in accordance with environmental factors, including ambient temperature, either measured using a thermometer 113 within the sauna or an external thermometer 113.

In yet further embodiments, the heating controller 121 my dynamically calculate the heating time period by monitoring the rate of temperature measured during previous heating time periods. Specifically, at step 133, during each heating time period, the heating controller 121 may interface the sensor controller 122 to measure temperature sensed by the thermometer 113. As such, the heating controller is able to calculate an average temperature time period gradient.

As such, for an upcoming session, the heater controller 121 may dynamically calculate the heating time period in accordance with the measured average temperature time period gradient.

After the heating state 132, the state controller 124 may enter a ready state 140. During the ready state 140, the heater controller 121 may maintain temperature lower than an in-session temperature setpoint.

Furthermore, after the ready state 140, the state controller 124 may enter an in-session state 136. During the in-session state 136, the heater controller 121 may maintain the temperature of the sauna at the in-session temperature setpoint by monitoring temperature readings of the thermometer 131. As alluded to above, the temperature setpoint may be specified by the session data.

The in-session temperature setpoint may follow a program profile wherein, for example, a session gradually increases in temperature across the duration thereof.

At the end of a session, the controller 124 may revert to the standby mode 130 wherein the heater controller 121 deactivates the heater 114 so that the sauna cools.

As shown in Figure 3, in the in-session state 136, the state controller 124 may monitor whether a time period T exceeds a session period P.

The session period may similarly be specified by the session data.

As also shown in Figure 3, when entering the ready state 140 the communication controller 120 may transmit a notification at step 134 to the electronic device 102 between the heating state 132 and the session state 136.

At step 135, the state controller 124 may determine whether a response is received the notification 134.

If a response is received, the state controller 124 may progress to the in-session state 136. Alternatively, if no response is received for a time period, the state controller 124 may revert to the standby state 130.

For example, the communication controller 120 may transmit a push notification to the electronic device 102 which may display a prompt on a digital display 110 thereof indicating to the user that the sauna is ready for the session.

The user may acknowledge the prompt thereby causing the state controller 124 to progress to the in-session state 136.

In the ready state 140, the heating controller 121 may hold the temperature at a standby temperature lower than the in-session temperature setpoint and commence raising the temperature when receiving the response at step 135.

In embodiments, the state controller 124 may further determine a commencement delay prior entering the in-session state 136. For example, a user may control the electronic device 102 to respond that the user will only commence the session in 15 minutes wherein the heater controller 121 will thereby control the heater 114 to raise the temperature from the standby temperature to the temperature setpoint over the 15 minute period.

In alternative embodiments, the system 100 may determine the location of the electronic device 102 such as by using the GPS receiver 111 thereof. As such, the heater controller 121 may hold the temperature at the standby temperature until the electronic device 102 comes within a geo-fence proximity of the sauna.

In embodiments, the state controller 124 may receive a response in other manners. For example, the proximity 139 may comprise a passive infrared motion sensor, door reed switch or the like which detects the presence of a person at the sauna. In further embodiments, the proximity sensor 139 may detect a Bluetooth BLE transmission by the wireless communication interface 112 of the electronic device 112. In further embodiments, the state controller 124 may receive the response from user interaction with the user interface of the electronic device 103.

As such, when detecting the proximity of a person using the proximally sensor 139, the state controller 124 may move from the ready state 140 to the in-session state 136.

In embodiments, the state controller 124 may enter the in-session state 136 when receiving either the response from the electronic device 102 or detecting proximity of a person using the proximity sensor 139.

During the session, the controller 101 may control the display controller 117 to display a countdown timer counted down the in-session time period P.

In the in-session state 136, the I/O controller 118 may control the various peripherals, including controlling the lighting controller 115, audio controller 116 and the like at step 137.

For example, the session data may specify lighting parameters, including lighting colour, hue and intensity and wherein, during the session, the I/O controller 118 controls the lighting controller 115 accordingly. Furthermore, the session data may specify music parameters, including genre, playlist and the like wherein, during the session, the I/O controller 118 controls the audio controller 116 to play music accordingly.

In embodiments, I/O controller 118 may control the lighting controller 115 to indicate the operational state of the state controller.

The state controller 124 may further enter a paused state 138. The state controller 124 may enter the paused state after the heating state 132 (i.e. in anticipation of the commencement of the in-session state 136) or alternatively enter the paused state 138 at any time during the in-session state 136.

In the paused state 138, the heating controller may hold the temperature at the lower standby temperature.

The foregoing description, for purposes of explanation, used specific nomenclature to provide a thorough understanding of the invention. However, it will be apparent to one skilled in the art that specific details are not required in order to practise the invention. Thus, the foregoing descriptions of specific embodiments of the invention are presented for purposes of illustration and description. They are not intended to be exhaustive or to limit the invention to the precise forms disclosed as obviously many modifications and variations are possible in view of the above teachings. The embodiments were chosen and described in order to best explain the principles of the invention and its practical applications, thereby enabling others skilled in the art to best utilize the invention and various embodiments with various modifications as are suited to the particular use contemplated. The invention is defined by the appended claims.

The term "approximately" or similar as used herein should be construed as being within 10% of the value stated unless otherwise indicated.

## Claims

1. A sauna operational state control system comprising a controller (101) comprising
an I/O interface i (103) interfacing a heater (114);
a processor (109) executing:
a state controller (124), the state controller configurable in a plurality of sauna operational states including standby and heating states; and
a heater controller (121) operably controlling the heater via the I/O interface; and
data storage, wherein, the state controller is configured to:
receive schedule data when in the standby state and store the schedule data in the data storage;
calculate a session start time according to the schedule data;
calculate a heating time period;
calculate a heating time period start time according to the session start time and the heating time period;
monitor time and, at the heating time period start time, enter the heating state wherein the heater controller operates the heater.

2. The system as claimed in claim 1, wherein the data storage comprises configuration settings and wherein the session controller calculates the warmup time period according to the configuration settings.

3. The system as claimed in claim 1, wherein the processor further executes a sensor controller interfacing a thermometer and wherein the heating controller dynamically calculates the heating time period in accordance with temperature sensed by the thermometer.

4. The system as claimed in claim 1, wherein the processor executes a sensor controller operably interfacing a thermometer via the I/O interface and wherein the controller calculates the warmup time period according to temperature measurements previously measured by the thermometer.

5. The system as claimed in claim 1, wherein the system further comprises an electronic device in operable communication with the controller via a data interface and wherein the controller receives the schedule data from the electronic device via the data interface.

6. The system as claimed in claim 1, wherein the schedule data specifies a session duration.

7. The system as claimed in claim 1, wherein the schedule data specifies lighting parameters including at least one of colour, hue and intensity.

8. The system as claimed in claim 1, wherein the schedule data specifies audio music parameters.

9. The system as claimed in claim 1, wherein the processor further executes a sensor controller operably interfacing a thermometer via the I/O interface and wherein the controller exits the heating state depending on a temperature reading measured by the thermometer.

10. The system as claimed in claim 9, wherein the controller exits the heating state when the temperature reading is within a threshold of a temperature setpoint.

11. The system as claimed in claim 5, wherein the plurality of sauna operational states further includes a ready state and an in-session state and wherein the controller enters the ready state after the heating state and the in-session state after the ready state.

12. The system as claimed in claim 11, wherein the processor executes a communication controller which transmits a notification to the electronic device when entering the ready state.

13. The system as claimed in claim 12, wherein the state controller moves from the ready state to the in-session state if receiving an acknowledgement from the electronic device.

14. The system as claimed in claim 12, wherein the processor executes a sensor controller operably interfacing a proximity sensor and wherein the state controller moves from the ready state to the in-session state depending on readings from the proximity sensor.

15. The system as claimed in claim 14, wherein the proximity sensor comprises at least one of an infrared motion sensor, door switch and short-range broadcast sensor.

16. The system as claimed in claim 12, wherein the processor executes a sensor controller operably interfacing a proximity sensor and wherein the state controller moves from the ready state to the in-session state depending on readings from the proximity sensor or if receiving an acknowledgement from the electronic device.

17. The system as claimed in claim 12, wherein, in the ready state, the heating controller holds temperature at a standby temperature lower than an in-session temperature setpoint.

18. The system as claimed in claim 12, wherein the state controller moves to the standby state if the state controller does not receive an acknowledgement from the electronic device within a predetermined period.

19. The system as claimed in claim 1, wherein the schedule data specifies a session duration and wherein the state controller reverts to the standby state after the duration.

20. The system as claimed in claim 1, wherein the controller further executes an I/O controller interfacing a lighting controller, wherein the schedule data specifies lighting parameters including at least one of colour, hue and intensity and wherein the I/O controller controls the lighting controller accordingly when in the in-session state.

21. The system as claimed in claim 1, wherein the controller further executes an I/O controller interfacing an audio controller, wherein the schedule data specifies audio music parameters and wherein the I/O controller controls the audio controller accordingly when in the in-session state.

22. The system as claimed in claim 5, wherein the state controller moves from the ready state to the in-session state after a commencement delay.

23. The system as claimed in claim 22, wherein the commencement delay is received from the electronic device.

24. The system as claimed in claim 22, wherein the commencement delay is calculated according to a location of the electronic device.

25. The system as claimed in claim 1, wherein the processor further executes an I/O controller which controls a lighting controller to indicate the operational state of the state controller.

26. The system as claimed in claim 1, wherein the state controller can further enter a paused state.

27. The system as claimed in claim 26, wherein the state controller enters the paused state after the ready state.

28. The system as claimed in claim 26, wherein the state controller can enter the paused state after an in-session state.

29. The system as claimed in claim 26, wherein, in the paused state, the heating controller holds temperature lower than an in-session temperature setpoint.

## Patentansprüche

1. Sauna-Betriebszustandssteuerungssystem, umfassend eine Steuerung (101) umfassend:
eine E/A-Schnittstelle (103), die mit einer Heizvorrichtung (114) verbunden ist;
einen Prozessor (109), der Folgendes ausführt:
eine Zustandssteuerung (124), wobei die Zustandssteuerung in eine Vielzahl von Sauna-Betriebszuständen konfigurierbar ist, die einen Standby- und einen Heizzustand einschließen; und
eine Heizungssteuerung (121), welche die Heizvorrichtung über die E/A-Schnittstelle betriebsmäßig steuert;
und
einen Datenspeicher, wobei die Zustandssteuerung konfiguriert ist zum:
Empfangen von Zeitplandaten, wenn sie sich im Standby-Zustand befindet, und Speichern der Zeitplandaten im Datenspeicher;
Berechnen einer Sitzungsstartzeit gemäß den Zeitplandaten;
Berechnen eines Heizzeitraums;
Berechnen einer Heizzeitraum-Startzeit gemäß der Sitzungsstartzeit und dem Heizzeitraum;
Überwachen der Zeit und, zu der Heizzeitraum-Startzeit, Eintreten in den Heizzustand, in dem die Heizungssteuerung die Heizvorrichtung betreibt.

2. System nach Anspruch 1, wobei der Datenspeicher Konfigurationseinstellungen umfasst und wobei die Sitzungssteuerung den Aufwärmzeitraum gemäß den Konfigurationseinstellungen berechnet.

3. System nach Anspruch 1, wobei der Prozessor ferner eine Sensorsteuerung ausführt, die mit einem Thermometer verbunden ist, und wobei die Heizungssteuerung den Heizzeitraum in Übereinstimmung mit der vom Thermometer erfassten Temperatur dynamisch berechnet.

4. System nach Anspruch 1, wobei der Prozessor eine Sensorsteuerung ausführt, die über die E/A-Schnittstelle betriebsmäßig mit einem Thermometer verbunden ist, und wobei die Steuerung den Aufwärmzeitraum gemäß Temperaturmessungen berechnet, die zuvor von dem Thermometer gemessen wurden.

5. System nach Anspruch 1, wobei das System ferner ein elektronisches Gerät in betriebsmäßiger Kommunikation mit der Steuerung über eine Datenschnittstelle umfasst und wobei die Steuerung die Zeitplandaten von dem elektronischen Gerät über die Datenschnittstelle empfängt.

6. System nach Anspruch 1, wobei die Zeitplandaten eine Sitzungsdauer spezifizieren.

7. System nach Anspruch 1, wobei die Zeitplandaten Beleuchtungsparameter spezifizieren, die mindestens eines aus Farbe, Farbton und Intensität einschließen.

8. System nach Anspruch 1, wobei die Zeitplandaten Audio-Musikparameter spezifizieren.

9. System nach Anspruch 1, wobei der Prozessor ferner eine Sensorsteuerung ausführt, die über die E/A-Schnittstelle betriebsmäßig mit einem Thermometer verbunden ist, und wobei die Steuerung den Heizzustand in Abhängigkeit von einem durch das Thermometer gemessenen Temperaturwert verlässt.

10. System nach Anspruch 9, wobei die Steuerung den Heizzustand verlässt, wenn der Temperaturwert innerhalb eines Schwellenwerts eines Temperatursollwerts liegt.

11. System nach Anspruch 5, wobei die Vielzahl von Sauna-Betriebszuständen ferner einen Bereitzustand und einen In-Sitzung-Zustand einschließt und wobei die Steuerung nach dem Heizzustand in den Bereitzustand und nach dem Bereitzustand in den In-Sitzung-Zustand eintritt.

12. System nach Anspruch 11, wobei der Prozessor eine Kommunikationssteuerung ausführt, die eine Benachrichtigung an das elektronische Gerät überträgt, wenn sie in den Bereitzustand eintritt.

13. System nach Anspruch 12, wobei die Zustandssteuerung vom Bereitzustand in den In-Sitzung-Zustand wechselt, wenn sie eine Bestätigung von dem elektronischen Gerät empfängt.

14. System nach Anspruch 12, wobei der Prozessor eine Sensorsteuerung ausführt, die betriebsmäßig mit einem Näherungssensor verbunden ist, und wobei die Zustandssteuerung in Abhängigkeit von Messwerten des Näherungssensors vom Bereitzustand in den In-Sitzung-Zustand wechselt.

15. System nach Anspruch 14, wobei der Näherungssensor mindestens eines aus einem Infrarot-Bewegungssensor, einem Türschalter und einem Kurzstrecken-Rundfunksensor umfasst.

16. System nach Anspruch 12, wobei der Prozessor eine Sensorsteuerung ausführt, die betriebsmäßig mit einem Näherungssensor verbunden ist, und wobei die Zustandssteuerung in Abhängigkeit von Messwerten des Näherungssensors oder bei Empfang einer Bestätigung von dem elektronischen Gerät vom Bereitzustand in den In-Sitzung-Zustand wechselt.

17. System nach Anspruch 12, wobei die Heizungssteuerung im Bereitzustand die Temperatur auf einer Standby-Temperatur hält, die niedriger als ein In-Sitzung-Temperatursollwert ist.

18. System nach Anspruch 12, wobei die Zustandssteuerung in den Standby-Zustand wechselt, wenn die Zustandssteuerung innerhalb eines vorbestimmten Zeitraums keine Bestätigung von dem elektronischen Gerät empfängt.

19. System nach Anspruch 1, wobei die Zeitplandaten eine Sitzungsdauer spezifizieren und wobei die Zustandssteuerung nach Ablauf der Dauer in den Standby-Zustand zurückkehrt.

20. System nach Anspruch 1, wobei die Steuerung ferner eine E/A-Steuerung ausführt, die mit einer Beleuchtungssteuerung verbunden ist, wobei die Zeitplandaten Beleuchtungsparameter spezifizieren, die mindestens eines aus Farbe, Farbton und Intensität einschließen, und wobei die E/A-Steuerung die Beleuchtungssteuerung entsprechend steuert, wenn sie sich im In-Sitzung-Zustand befindet.

21. System nach Anspruch 1, wobei die Steuerung ferner eine E/A-Steuerung ausführt, die mit einer Audiosteuerung verbunden ist, wobei die Zeitplandaten Audio-Musikparameter spezifizieren und wobei die E/A-Steuerung die Audiosteuerung entsprechend steuert, wenn sie sich im In-Sitzung-Zustand befindet.

22. System nach Anspruch 5, wobei die Zustandssteuerung nach einer Beginnverzögerung vom Bereitzustand in den In-Sitzung-Zustand wechselt.

23. System nach Anspruch 22, wobei die Beginnverzögerung von dem elektronischen Gerät empfangen wird.

24. System nach Anspruch 22, wobei die Beginnverzögerung gemäß einem Standort des elektronischen Geräts berechnet wird.

25. System nach Anspruch 1, wobei der Prozessor ferner eine E/A-Steuerung ausführt, die eine Beleuchtungssteuerung steuert, um den Betriebszustand der Zustandssteuerung anzuzeigen.

26. System nach Anspruch 1, wobei die Zustandssteuerung ferner in einen Pausenzustand eintreten kann.

27. System nach Anspruch 26, wobei die Zustandssteuerung nach dem Bereitzustand in den Pausenzustand eintritt.

28. System nach Anspruch 26, wobei die Zustandssteuerung nach einem In-Sitzung-Zustand in den Pausenzustand eintreten kann.

29. System nach Anspruch 26, wobei die Heizungssteuerung im Pausenzustand die Temperatur niedriger als einen In-Sitzung-Temperatursollwert hält.

## Revendications

1. Système de commande d'état de fonctionnement de sauna comprenant un contrôleur (101) comprenant :
une interface d'E/S (103) s'interfaçant avec un dispositif de chauffage (114) ;
un processeur (109) exécutant :
un contrôleur d'état (124), le contrôleur d'état étant configurable dans une pluralité d'états de fonctionnement de sauna comprenant des états de veille et de chauffage ; et
un contrôleur de dispositif de chauffage (121) commandant de manière opérationnelle le dispositif de chauffage via l'interface d'E/S ;
et
un stockage de données, dans lequel le contrôleur d'état est configuré pour :
recevoir des données de planification lorsqu'il se trouve dans l'état de veille et stocker les données de planification dans le stockage de données ;
calculer une heure de début de séance selon les données de planification ;
calculer une période de temps de chauffage ;
calculer une heure de début de période de temps de chauffage selon l'heure de début de séance et la période de temps de chauffage ;
surveiller le temps et, à l'heure de début de période de temps de chauffage, passer à l'état de chauffage dans lequel le contrôleur de dispositif de chauffage actionne le dispositif de chauffage.

2. Système selon la revendication 1, dans lequel le stockage de données comprend des réglages de configuration et dans lequel le contrôleur de séance calcule la période de temps de préchauffage selon les réglages de configuration.

3. Système selon la revendication 1, dans lequel le processeur exécute en outre un contrôleur de capteur s'interfaçant avec un thermomètre et dans lequel le contrôleur de chauffage calcule de manière dynamique la période de temps de chauffage en fonction de la température captée par le thermomètre.

4. Système selon la revendication 1, dans lequel le processeur exécute un contrôleur de capteur s'interfaçant de manière opérationnelle avec un thermomètre via l'interface d'E/S et dans lequel le contrôleur calcule la période de temps de préchauffage selon des mesures de température précédemment mesurées par le thermomètre.

5. Système selon la revendication 1, dans lequel le système comprend en outre un dispositif électronique en communication opérationnelle avec le contrôleur via une interface de données et dans lequel le contrôleur reçoit les données de planification depuis le dispositif électronique via l'interface de données.

6. Système selon la revendication 1, dans lequel les données de planification spécifient une durée de séance.

7. Système selon la revendication 1, dans lequel les données de planification spécifient des paramètres d'éclairage comprenant au moins l'un parmi la couleur, la teinte et l'intensité.

8. Système selon la revendication 1, dans lequel les données de planification spécifient des paramètres de musique audio.

9. Système selon la revendication 1, dans lequel le processeur exécute en outre un contrôleur de capteur s'interfaçant de manière opérationnelle avec un thermomètre via l'interface d'E/S et dans lequel le contrôleur quitte l'état de chauffage en fonction d'une lecture de température mesurée par le thermomètre.

10. Système selon la revendication 9, dans lequel le contrôleur quitte l'état de chauffage lorsque la lecture de température se situe dans les limites d'un seuil d'un point de consigne de température.

11. Système selon la revendication 5, dans lequel la pluralité d'états de fonctionnement de sauna comprend en outre un état prêt et un état en séance et dans lequel le contrôleur passe à l'état prêt après l'état de chauffage et à l'état en séance après l'état prêt.

12. Système selon la revendication 11, dans lequel le processeur exécute un contrôleur de communication qui transmet une notification au dispositif électronique lors du passage à l'état prêt.

13. Système selon la revendication 12, dans lequel le contrôleur d'état passe de l'état prêt à l'état en séance s'il reçoit un accusé de réception de la part du dispositif électronique.

14. Système selon la revendication 12, dans lequel le processeur exécute un contrôleur de capteur s'interfaçant de manière opérationnelle avec un capteur de proximité et dans lequel le contrôleur d'état passe de l'état prêt à l'état en séance en fonction de lectures provenant du capteur de proximité.

15. Système selon la revendication 14, dans lequel le capteur de proximité comprend au moins l'un parmi un capteur de mouvement infrarouge, un commutateur de porte et un capteur de diffusion à courte portée.

16. Système selon la revendication 12, dans lequel le processeur exécute un contrôleur de capteur s'interfaçant de manière opérationnelle avec un capteur de proximité et dans lequel le contrôleur d'état passe de l'état prêt à l'état en séance en fonction de lectures provenant du capteur de proximité ou s'il reçoit un accusé de réception de la part du dispositif électronique.

17. Système selon la revendication 12, dans lequel, dans l'état prêt, le contrôleur de chauffage maintient la température à une température de veille inférieure à un point de consigne de température en séance.

18. Système selon la revendication 12, dans lequel le contrôleur d'état passe à l'état de veille si le contrôleur d'état ne reçoit pas un accusé de réception de la part du dispositif électronique dans les limites d'une période prédéterminée.

19. Système selon la revendication 1, dans lequel les données de planification spécifient une durée de séance et dans lequel le contrôleur d'état revient à l'état de veille après la durée.

20. Système selon la revendication 1, dans lequel le contrôleur exécute en outre un contrôleur d'E/S s'interfaçant avec un contrôleur d'éclairage, dans lequel les données de planification spécifient des paramètres d'éclairage comprenant au moins l'un parmi la couleur, la teinte et l'intensité et dans lequel le contrôleur d'E/S commande le contrôleur d'éclairage en conséquence lorsqu'il se trouve dans l'état en séance.

21. Système selon la revendication 1, dans lequel le contrôleur exécute en outre un contrôleur d'E/S s'interfaçant avec un contrôleur audio, dans lequel les données de planification spécifient des paramètres de musique audio et dans lequel le contrôleur d'E/S commande le contrôleur audio en conséquence lorsqu'il se trouve dans l'état en séance.

22. Système selon la revendication 5, dans lequel le contrôleur d'état passe de l'état prêt à l'état en séance après un retard de commencement.

23. Système selon la revendication 22, dans lequel le retard de commencement est reçu depuis le dispositif électronique.

24. Système selon la revendication 22, dans lequel le retard de commencement est calculé selon une localisation du dispositif électronique.

25. Système selon la revendication 1, dans lequel le processeur exécute en outre un contrôleur d'E/S qui commande un contrôleur d'éclairage pour indiquer l'état de fonctionnement du contrôleur d'état.

26. Système selon la revendication 1, dans lequel le contrôleur d'état peut en outre passer à un état de pause.

27. Système selon la revendication 26, dans lequel le contrôleur d'état passe à l'état de pause après l'état prêt.

28. Système selon la revendication 26, dans lequel le contrôleur d'état peut passer à l'état de pause après un état en séance.

29. Système selon la revendication 26, dans lequel, dans l'état de pause, le contrôleur de chauffage maintient la température à un niveau inférieur à un point de consigne de température en séance.
